# EUROPEAN PATENT APPLICATION

(11) **EP 3 372 827 A1**
(43) Date of publication of application: **12.09.2018**
(21) Application number: 18160181.6
(22) Date of filing: 06.03.2018
(51) Int. Cl.: F03D 1/06, F03D 17/00, G01L 1/24

(54) **WIND TURBINE BLADE OR WIND POWER GENERATION DEVICE**

(30) Priority: 07.03.2017 JP 2017042333
(71) Applicant: Hitachi, Ltd., Chiyoda-ku Tokyo 100-8280 (JP)
(72) Inventor: UETA, Ryo, Tokyo 100-8280 (JP); SAEKI, Mitsuru, Tokyo 100-8280 (JP)
(74) Representative: MERH-IP Matias Erny Reichl Hoffmann Patentanwälte PartG mbB

(57) **Abstract**

To provide a wind turbine blade or a wind power generation device provided with a strain detecting system having a high level of soundness . The blade 4 includes a structural material constituting the blade 4, plural optical fibers 15A and 15B arranged within or on a surface of the structural material, and an optical cable 16A that connects adjacent ones of the optical fiber sensors 15A to 15G, and a length of the optical cable 16A is longer than the shortest distance between the adjacent optical fiber sensors 15A to 15G.

## Description

### Technical Field

The present invention relates to a wind turbine blade or a wind power generation device, in particular to what has a strain detecting system.

### Background Art

In recent years, from the viewpoint of addressing environmental conservation in response to global warming problems, the demand for generation of wind power as recoverable energy has been expanding. Blades for wind turbines constituting wind power generation facilities are subject to bending deformation and torsional deformation. In addition, they may be damaged by thunderbolt. There is a tendency for larger wind power generation facilities to enhance efficiency of power generation, and huge power generation facilities whose rotors surpass 100 m in rotor diameter are coming into practical use. Therefore, large wind power generation facilities expand in the wind receiving areas of their blades, which are subject to serious deformation. Furthermore, since the increasing dimensions of wind power generation facilities entail higher positions of their rotors from the ground level, the risk of blades and other components to suffer thunderbolt increases.

Therefore, for maintaining the soundness of blades, it is required to constantly monitor the behavior of blades during operation and to properly repair the blades if they are damaged.

Conventionally, in order to detect deformation extents of blades, strain sensors have been stuck to the inner and outer surfaces of blades to measure such deformation. However, electric deformation sensors involve the problems of a high risk of being damaged by thunderbolt and often susceptible to incidental mixing of electromagnetic noise issued by instrumentation around into measured data.

In order to solve the problem cited above, a system of installing optical fiber sensors such as (FBG; Fiber Bragg Grating) sensors on blades for use in the detection of blade strain is proposed as disclosed in Patent Literature 1. Optical fiber sensors are less susceptible to lightning than electrical strain sensors, and do not allow infiltration of electromagnetic noise from instrumentation around into measured data.

### Citation List

### Patent Literature

Patent Literature 1: Japanese Unexamined Patent Application Publication 2001-183114

### Summary of Invention

### Technical Problem

However, Patent Literature 1 cited above gives no heed to the risk of damage by stress on the optical fiber cable connecting one optical fiber sensor to another. Along with the elongation of wind turbine blades, the extent of blade deformation increases. Therefore, even if an optical fiber sensor is used, the optical fiber sensor and the optical fiber cable are required to be able to endure tensile stress or compression stress.

In addition to the elongation of wind turbine blades, for instance, in the case of downwind type wind turbines whose rotors are arranged on the leeward side of the tower, since the blade that receives wind moves in the direction away from the tower, the risk of collision is smaller than in the case of upwind type wind mills. Thus, blades for downwind type wind turbines can endure greater deformation risk than upwind type wind mills. Such blades can permit greater tensile stress and compression stress.

The present invention is intended to provide a wind turbine blade or a wind power generation device equipped with a strain detecting system of a high level of soundness.

### Solution to Problem

The wind turbine blade according to the present invention includes a structural material constituting the blade, plural optical fiber sensors arranged within or on the surface of the structural material, and an optical fiber cable connecting adjacent ones of the optical fiber sensors, wherein the length of the optical fiber cable is longer than the shortest distance linking the adjacent ones of the optical fiber sensors.

Further, the wind power generation device according to the present invention includes the wind turbine blade and a rotor having a hub, a nacelle pivotally supporting the rotor, and a tower rotatably supporting the nacelle.

### Advantageous Effects of Invention

According to the present invention, a wind turbine blade or a wind power generation device each with a strain detecting system having a high level of soundness can be provided.

### Brief Description of Drawings

Fig. 1 is an outline diagram showing the overall configuration of a wind power generation facility pertaining to one embodiment.
Fig. 2 is a schematic diagram showing the configuration of a wind turbine blade and a detecting system pertaining to one embodiment.
Fig. 3 is a schematic diagram showing the configuration of the wind turbine blade and the detecting system pertaining to one embodiment.
Fig. 4 is a schematic diagram showing a positive pressure side and a negative pressure side of the wind turbine blade pertaining to one embodiment.
Fig. 5 is a schematic diagram showing the configuration of the optical fiber sensor and the optical fiber cable pertaining to one embodiment
Fig. 6 is a schematic diagram showing the sectional configuration of the wind turbine blade wind turbine blade pertaining to one embodiment.
Fig. 7 is a schematic diagram showing the configuration of the main girder material pertaining to one embodiment.
Fig. 8 is a schematic diagram showing the configuration of a shell material and a web material pertaining to one embodiment.
Fig. 9 is a schematic diagram showing resin impregnation of fiber pertaining to one embodiment.
Fig. 10 is a schematic diagram showing the method of embedding the optical fiber sensor and the optical fiber cable into FRP pertaining to one embodiment.
Fig. 11 is a schematic diagram showing the FRP into which the optical fiber sensor and the optical fiber cable are embedded pertaining to one embodiment.
Fig. 12 is a schematic diagram showing the method of embedding the FRP into the optical fiber sensor and the optical fiber cable pertaining to one embodiment.
Fig. 13 is a schematic diagram showing the FRP embedded in the optical fiber sensor and the optical fiber cable pertaining to one embodiment.
Fig. 14 is a schematic diagram showing the embedding of the optical fiber sensor and the optical fiber cable pertaining to one embodiment into a negative pressure side girder side.
Fig. 15 is a schematic diagram showing the embedding of the optical fiber sensor and the optical fiber cable pertaining to one embodiment into a positive pressure side main girder.

### Description of Embodiments

Embodiments preferred for implementation of the present invention will be described below with reference to drawings. It is to be noted, however, that what follows is strictly examples of implementation, but not intended to limit the objects of applying the present invention to the following specific modes.

### First Embodiment

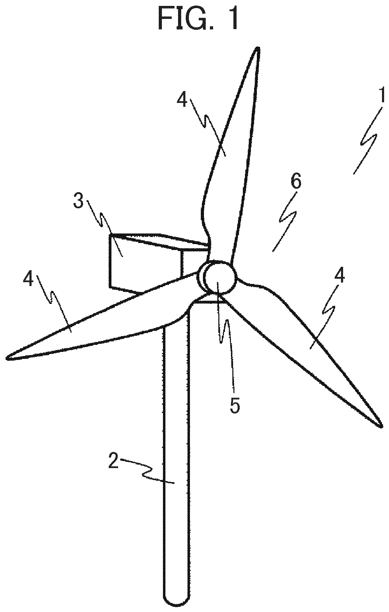

As shown in Fig. 1, a wind turbine 1 is configured of a tower 2, a nacelle 3 so installed in the upper part of the tower 2 to permit rotative driving in a horizontal face, and a rotor 6 connected to the nacelle 3 and configured of three blades 4 and a hub 5. The rotor 6 is rotatably supported by the nacelle via a main shaft the optical fiber cable 16B. The number of blades is only an example, but they can be installed in some other number.

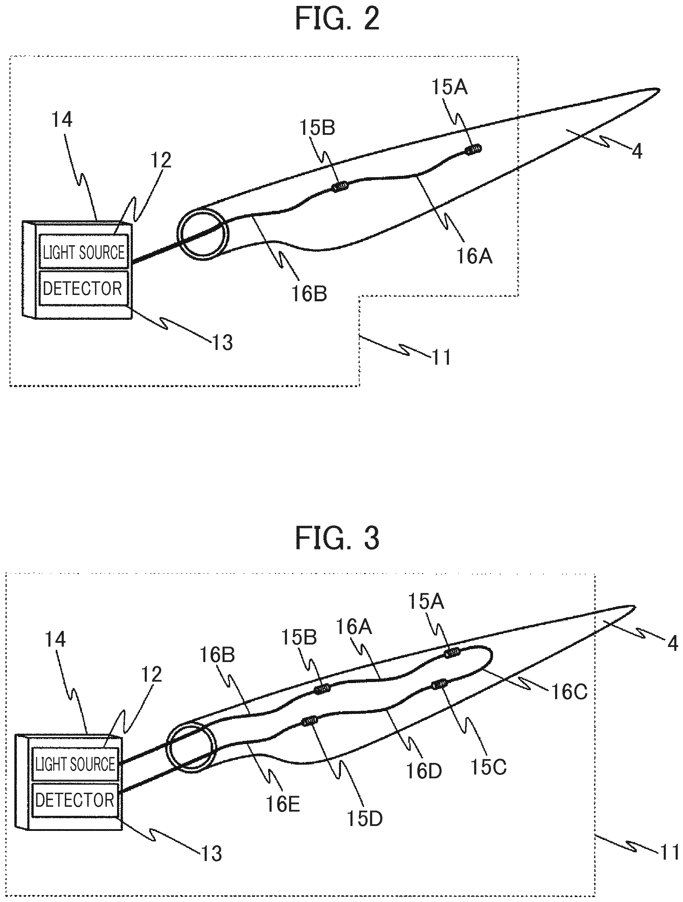

In Fig. 2, a blade 4 and a detecting system 11 that detects any strain of the blade 4 are shown. The detecting system 11 is configured of an optical processing unit 14 so configured as to include a light source 12 that radiates light and a detector 13 that detects reflected light, plural optical fiber sensors 15A and 15B arranged in different positions within the blade 4, an optical fiber cable 16A that connects the plural optical fiber sensor 15A with 15B and an optical fiber cable 16B that connects the optical fiber sensor 15B with the optical processing unit 14. In this embodiment, the optical fiber sensor 15A and the optical fiber sensor 15B are supposed to be FBG sensors, and they are arranged in at least one of the blades 4 in the lengthwise direction. The type of the optical fiber sensor is not limited to FBG sensor. Other than that, it may be, for instance, a distributed type optical fiber sensor that detects scattered light in optical fibers.

Light radiated from the light source 12 is transmitted to the optical fiber sensor 15B via the optical fiber cable 16B. The light transmitted by the optical fiber sensor 15B is transmitted to the optical fiber sensor 15A via the optical fiber cable 16A. The optical fiber sensor 15A and the optical fiber sensor 15B reflect light having a wavelength corresponding to the strain variation quantities of the blade 4 in the installed position of each sensor to the detector 13 via the optical fiber cable 16A and the optical fiber cable 16B. The detector 13 detects the wavelength of the transmitted reflection light. The detected reflection light is converted into a strain quantity corresponding to the wavelength by using an arithmetic device that converts optical intensity into strain, though not shown in Fig. 1.

In this embodiment, the optical fiber cable 16A is arranged in a length not less than the shortest distance between the optical fiber sensor 15A and the optical fiber sensor 15B. Thus, the optical fiber cable 16A has a curved part as shown in Fig. 2. Therefore, if the blade 4 on which the optical fiber sensor 15A and the optical fiber sensor 15B are disposed is subjected to tensile stress by bending deformation or torsional deformation, the optical fiber cable 16A is pulled and the curvature of the curved part of the optical fiber cable 16A will be gradually reduced. The curvature of the curved part becomes zero and no tensile stress arises in the optical fiber cable 16A until the length of the optical fiber cable 16A becomes equal to the shortest distance between the optical fiber sensor 15A and the optical fiber sensor 15B. On the other hand, if compressive strength is caused to work on the optical fiber cable 16A by bending deformation or torsional deformation of the blade 4, the curvature of the curved part will gradually increase. Thus, by providing a curved part on the optical fiber cable 16A in advance, damage to the optical fiber cable 16A by buckling can be restrained. Therefore, this first embodiment can reduce the frequency of damages to the optical fiber cable 16A by bending deformation or torsional deformation can be reduced and, even if the blade 4 is significantly deformed, the soundness of the detecting system 11 can be maintained.

The optical fiber cable 16A may as well be provided by so bending a straight-shaped optical fiber cable as to prevent generation of torsional deformation or bending deformation and arranged between the optical fiber sensor 15A and the optical fiber sensor 15B. Or an optical fiber cable having a curved part may be used from the outset. If an optical fiber cable having a curved part is used from the outset, in the process of gradual decrease of the curvature of the curved part, the tangential direction component of the torsional deformation or compressive deformation of the optical fiber cable can be made smaller than the stress component in the direction of a straight line linking the optical fiber sensor 15A with the optical fiber sensor 15B.

In the first embodiment, the connection between the optical processing unit 14 and the optical fiber sensor 15B is accomplished by the optical fiber cable 16B, but this embodiment is not limited to the configuration shown in Fig. 2. For instance, as shown in Fig. 3, the optical fiber sensors 15A to 15D and the optical fiber cables 16A to 16E may be so arranged as to move the blade back and forth in the lengthwise and connect the light source 12 and the detector 13 with different optical fiber cables 16B and 16E, respectively. Also in this case, regarding the respective optical fiber cables, optical fiber cable 16A is disposed with a length longer than the distance connecting connection points. Namely, the respective optical fiber cables have curved parts.

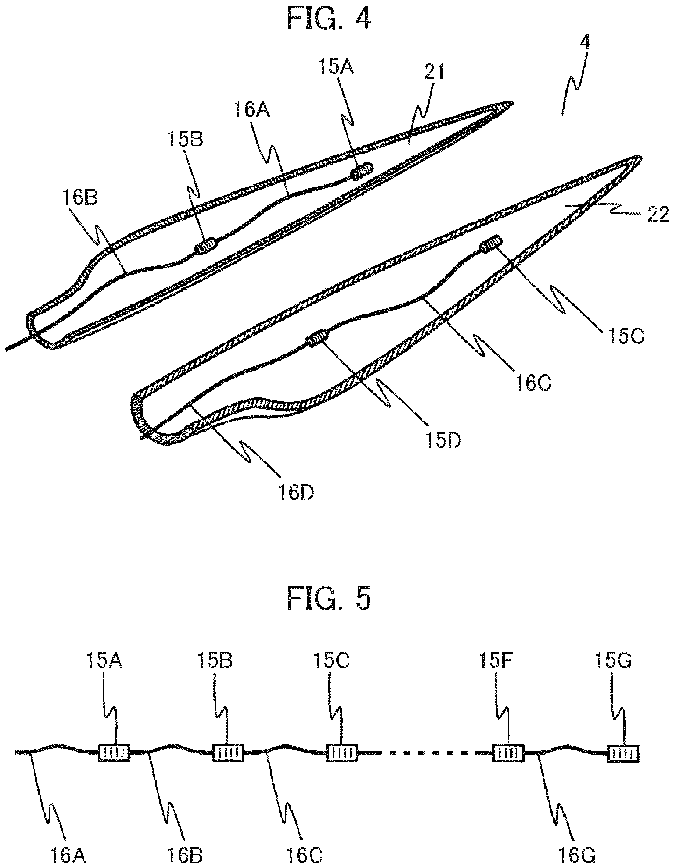

In the first embodiment, the optical fiber sensor 15A and the optical fiber sensor 15B may be stuck to the outer surface or the inner surface of a blade 4. If the optical fiber sensor 15A and the optical fiber sensor 15B are stuck to the inner surface of the blade 4, the working space for humans within the blade 4 will narrow from the root of the blade toward the tip after the blade 4 is manufactured. In that case, the area in which the optical fiber sensors can be stuck is limited to about one third of the blade overall length from the blade root toward the tip. Fig. 4 shows the positive pressure side 21 and the negative pressure side 22 in the manufacturing process of the blade 4. Since a blade is usually manufactured by first making the positive pressure side and the negative pressure side each by itself and then sticking them together, the optical fiber sensor 15A and the optical fiber sensor 15B are stuck to the inner surface of the blade 4 on the positive pressure side 21, while the optical fiber sensor 15C and the optical fiber sensor 15D are stuck to the inner surface on the negative pressure side 22, followed by sticking of the positive pressure side and the negative pressure side to allow installation of the optical fiber sensors on the inner surface of the blade 4.

With reference to Fig. 2, the arrangement of the two optical fiber sensors and of the optical fiber cable was commented on, but obviously the arrangement is not limited to this one. As shown in Fig. 5, three or more optical fiber cables 16A, 16B, ... 16G connecting the three or more mutually adjacent optical fiber sensors 15A, 15B, ... 15G may as well be stuck to the outer surface of the blade 4 in the lengthwise direction, the circumferential direction or a combination of these directions. The three or more optical fiber sensors 15A to 15G and the three or more optical fiber cables 16A to 16G may be stuck in the lengthwise or, the circumferential direction or a combination of these directions of one or both of the positive pressure side 21 and the negative pressure side 22 of the blade 4. The three or more optical fiber sensors 15A to 15G and the three or more optical fiber cables 16A to 16G may be stuck in series or side by side in the lengthwise or, the circumferential direction or a combination of these directions.

### Second Embodiment

Whereas sticking the optical fiber sensor 15A and the optical fiber sensor 15B to the outer surface or the inner surface of the blade 4 has been explained in the first embodiment, if the detecting system 11 shown with respect to the first embodiment is to be disposed in the outer surface of the blade 4, concaves and convexes are formed in the outer surface of the blade 4 depending on the arrangement of the plural optical fiber sensors. The concaves and convexes reduce aerodynamic performance of the blade 4, and reduce generated wattage of the wind turbine. On the other hand, when the detecting system 11 is disposed on the inner surface of the blade 4, it is possible that residual adhesive for adhering he positive pressure side and the negative pressure side in the blade manufacture process goes back and forth as debris inside the blade 4, come into contact with the optical fiber sensor or the optical fiber cable, and wrongly detects a strain.

Now in this embodiment, the optical fiber sensors and the optical fiber cables are embedded in the constituent material of the blade. By taking this form, problems including misdetection of or damage to the debris which occurs if they are stuck to the inner surface or a drop in aerodynamic performance will not occur. Therefore, it is possible to prevent a drop in generated wattage and to enhance the soundness of the detecting system.

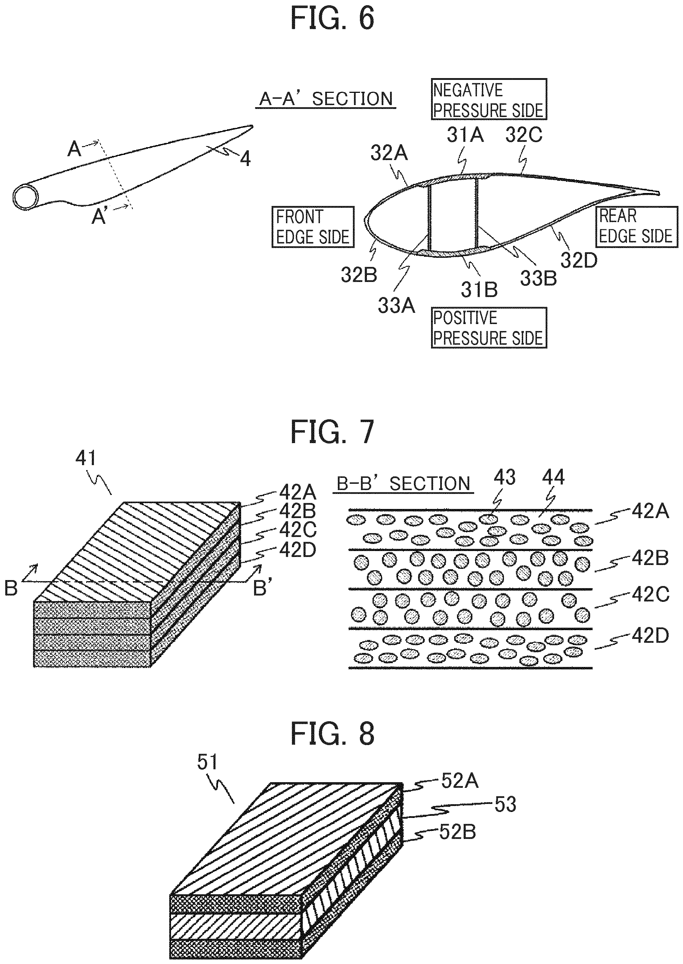

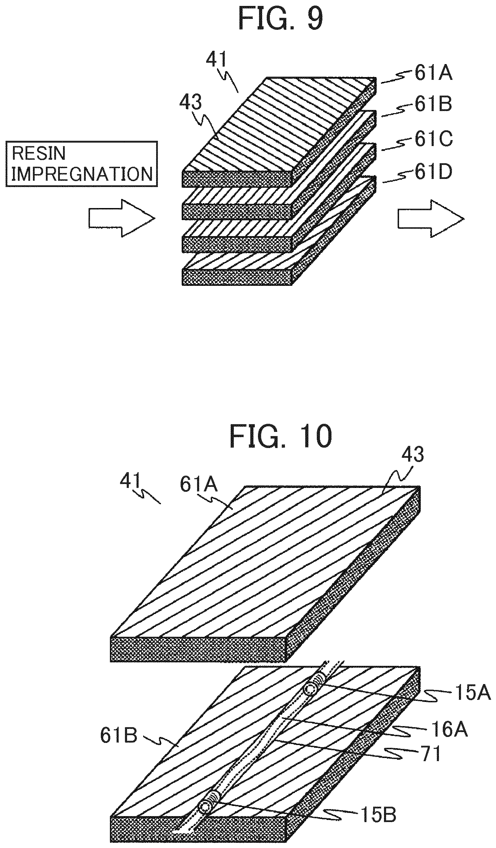

As shown in Fig. 6, the structural material constituting the blade 4 is so configured as to contain a negative pressure side main girder 31A, a positive pressure side main girder 31B, a front edge-cum-negative pressure side shell 32A and a front edge-cum-the positive pressure side shell 32B, a rear edge-cum-the negative pressure side shell 32C, a rear edge-cum-the positive pressure side shell 32D, a front edge side web 33A, and a rear edge side web 33B. The negative pressure side main girder 31A and the positive pressure side main girder 31B of the blade 4 are formed by piling up laminar layers 42A to 42D of Fiber-Reinforced Plastic (FRP) 41 as shown in Fig. 7. Generally, as fiber 43 of FRP 41 for use in blades, glass fiber or carbon fiber is used, and as matrix resin 44, epoxy or unsaturated polyester is used. On the other hand, as shown in Fig. 8, the shells 32A to 32D, the front edge side web 33A and the rear edge side web 33B are formed of a sandwich material 51 including FRP skins 52A and 52B and a core material 53. Generally, wood such as balsa or foamed resin such as foamed vinyl polychloride is used as the shell core material, and foamed resin such as foamed vinyl polychloride is used as the web core material. As shown in Fig. 9, the FRP 41 constituting the blade 4 is made by vacuuming after layers 61A to 61D of spun fibers and hardened by heating during resin impregnation. Incidentally, the blade 4 used in this embodiment is configured of a main girder formed of FRP 41 of glass fiber and epoxy resin, a shell of balsa and FRP 41 and a web of foamed vinyl polychloride and the aforementioned FRP 41.

As shown in Fig. 10, the optical fiber cable 16A connecting the optical fiber sensor 15A and the optical fiber sensor 15B together with the optical fiber sensor 15A and the optical fiber sensor 15B and a tube 71 covering the optical fiber cable 16A are arranged between fiber layers 61A and 61B. In this embodiment also, the optical fiber cable 16A is arranged in a length not shorter than the shortest distance of connecting the optical fiber sensor 15A and the optical fiber sensor 15B. In this embodiment, a rubber tube is used as the tube 71, and both outlets of the tube 71 are adhered to the optical fiber sensor 15A and the optical fiber sensor 15B. Since the optical fiber cable 16A is curved, the tube 71 is elastically deformed by tension, and a gap is formed between the optical fiber cable 16A and the tube 71. In a state in which a gap is formed between the optical fiber cable 16A and the tube 71 by applying resin impregnation between the fiber layers 61A and 61B after the arrangement shown in Fig. 10 is completed, the optical fiber sensors 15A and 15B and the optical fiber cable 16A covered by the tube 71 can be embedded into FRP 41.

As a gap is formed between the optical fiber cable 16A and the tube 71, the optical fiber cable 16A has freedom of displacement in a direction orthogonal to its tangent. Therefore, when the blade 4 is subjected to tensile stress or compressive stress by or bending deformation or torsional deformation, the optical fiber cable 16A can be varied in the curvature of its curved part.

In this second embodiment, as in the first embodiment, an optical fiber cable whose original shape is straight can be so curved as to not to cause tensile stress or compressive stress and arranged between the optical fiber sensor 15A and the optical fiber sensor 15B, or an optical fiber cable having a curved part from the outset may be used and arranged between the optical fiber sensor 15A and the optical fiber sensor 15B.

In this second embodiment, a rubber tube is supposed to be used for the tube 71. In this case, the fear of damage to the tube at the time of resin impregnation to cause inflow of resin into any gap between the optical fiber cable and the tube. Or instead of a rubber tube or the like, before resin impregnation, the optical fiber cable 16A may be covered with a filler material less rigid than the optical fiber cable 16A of rubber or sponge. In this case, the displacement freedom of the optical fiber cable 16A is not fully restricted as long as the filler material is not significantly rigid, and the degree of fixation of the optical fiber cable 16A by resin can be reduced.

Regarding the second embodiment, though the use of the two optical fiber sensors 15A and 15B and the optical fiber cable 16A to connect the optical fiber sensor 15A and the optical fiber sensor 15B has been mentioned, three or more optical fiber sensors, two or more optical fiber cables to connect adjacent optical fiber sensors to each other and two or more tubes covering two or more optical fiber cables or a filling material may as well be embedded. The plural optical sensors, plural optical fibers, and tubes or filler material may be embedded in the lengthwise direction of the blade or embedded in the circumferential direction of the blade. Or embedding may involve a combination of the lengthwise direction and the circumferential direction. Plural optical fiber sensors, the optical fiber cable and the tube or filling material may be buried in the lengthwise direction or the circumferential direction of the blade, or a combination of these directions, either in series or side by side.

Although the use of an FRP 41 of glass fiber and epoxy resin was supposed for the second embodiment, application to FRP combining aramid fiber and epoxy resin, for example, is possible in addition to the aforementioned fiber-resin combination.

In this second embodiment, there is no limitation regarding the position of embedding the optical fiber sensors and the optical fiber cable. For instance, since most of the load working on the blade is borne by the main girder, the optical fiber sensor and the optical fiber cable covered with the tube or filling material are embedded into the FRP constituting the main girder to measure the strain.

### Third Embodiment

In the second embodiment, a case where a tube or a filling material is embedded to cover an optical fiber cable connecting plural optical fiber sensors has been described.

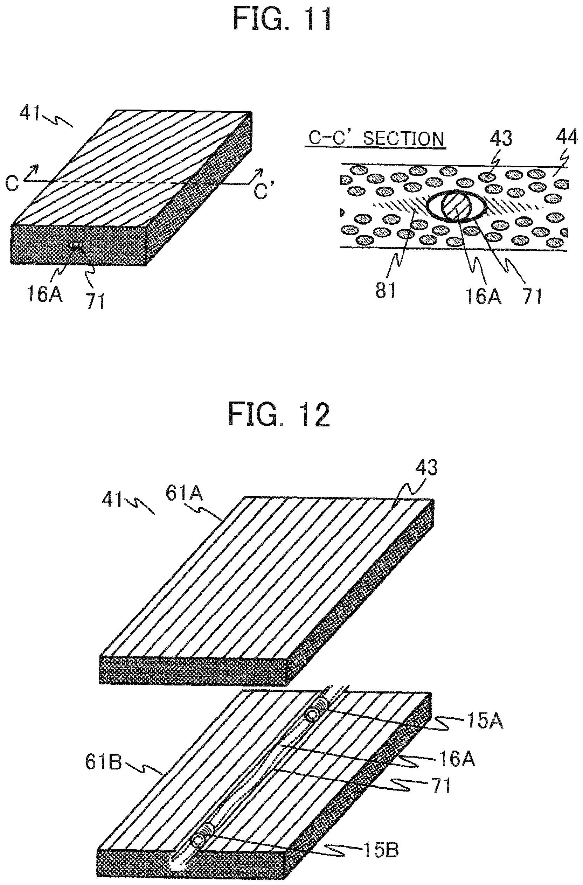

Embedding of a foreign matter such as the optical fiber sensor may affect the strength of FRP. As shown in Fig. 10, when the optical fiber sensors 15A and 15B, the optical fiber cable 16A and the tube 71 are arranged between fiber layers 61A and 61B, the fiber layers 61A and 61B undulate in the thickness direction because the optical fibers 15A and 15B as well as the optical fiber cable 16A and the tube 71 cross the fiber 43 in the thickness direction. As a result, as shown in Fig. 11, around the tube 71 covering the optical fiber cable 16A, the fiber 43 is sparsely arranged to form a resin-rich area 81. To compare the strengths of simple fiber and simple resin in the FRP 41, the strength of the resin-rich area 81 may prove lower than the area in which fiber is densely arranged because of the high strength of simple fiber.

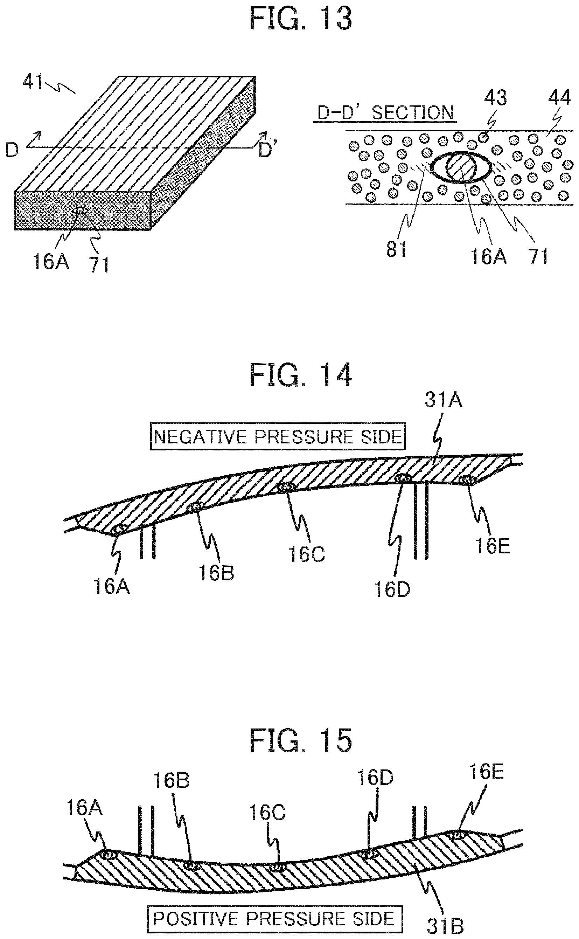

A more preferable method is to arrange is to arrange, as shown in Fig. 12, the optical fiber sensor 15A and the optical fiber sensor 15B as well as the optical fiber cable 16A covered by the tube 71 in the direction of the fiber 43 and perform resin impregnation. Since the optical fiber sensor 15A and the optical fiber sensor 15B, the optical fiber cable 16A and the tube 71 are not so arranged as to cross the fiber 43, the undulation of the fiber layers 61A and 61B in the thickness direction can be restrained. Therefore, as shown in Fig. 13, the magnitude of the resin-rich area formed around the tube 71 can be compressed, and its impact on the strength of the FRP 41 can be alleviated.

Further, the bending stress and the torsional stress working on the blade 4 are proportional to the distance from the blade axis extending in the lengthwise direction of the blade. Therefore, stresses arising in the FRP on the inner surface side are smaller than stresses arising in the FRP on the outer surface side. Fig. 14 shows an enlarged view of the negative pressure side main girder 31A of the blade 4, a case where the optical fiber cables 16A to 16E covered by a tube is embedded in the FRP on the inner surface side of the negative pressure side main girder 31A. By embedding plural optical fiber sensors and the tube-covered optical fiber cables in the FRP on the inner surface side of the negative pressure side main girder 31A, the impact on the whole FRP of the negative pressure side main girder can be reduced. Fig. 15 shows an enlarged view of the positive pressure side main girder 31B of the blade 4 and a case where the optical fiber cables 16A to 16E covered by a tube is embedded in the FRP on the inner surface side of the positive pressure side main girder 31B. Here again, by embedding plural optical fiber sensors and the tube-covered optical fiber cables in the FRP on the inner surface side of the positive pressure side main girder 31B, which is closer to the axis than on the outer surface side and accordingly the stress is less, the impact on the whole FRP of the positive pressure side main girder can be reduced. Whereas this embodiment has been described in the case of embedding sensors in the negative pressure side main girder 31A or the positive pressure side main girder 31B, plural optical fiber sensors and the tube-covered optical fiber cables in the FRP on the inner surface side of the shells 32A to 32D may as well be embedded. Another possibility is to embed plural optical fiber sensors and the tube-covered optical fiber cable in some or whole of the FRP on the inner surface side of the shells 32A to 32D. Since the FRP skins 52A and 52B of the webs 33A and 33B are shorter in distance from the axis of the blade 4 than the main girders and the shells, stresses working on the webs 33A and 33B are estimated to be less. Therefore, plural optical fiber sensors and the tube-covered optical fiber cable may be embedded in the FRP skins 52A and 52B of the webs 33A and 33B. Also, as stated with reference to Embodiment 2, the optical fiber cable may be covered with a less rigid filter material such as rubber or sponge. Plural optical fiber sensors and the optical fiber cable covered with a tube or a filler material may be embedded in the lengthwise direction of the blade or in the circumferential direction of the blade. Or embedding may follow a combination of the lengthwise direction and the circumferential direction. Plural optical fiber sensors and the optical fiber cable covered with a tube or a filler material may be embedded in series or side by side in the lengthwise direction or the circumferential direction or in a direction combining them, either in series or side by side.

### List of Reference Signs

- 1: Wind mill
- 2: Tower
- 3: Nacelle
- 4: Blade
- 5: Hub
- 6: Rotor
- 11: Detecting system
- 12: Light source
- 13: Detector
- 14: Optical processing unit
- 15A to 15G: Optical fiber sensors
- 16A to 16G: Optical fiber cables
- 21: Positive pressure side
- 22: Negative pressure side
- 31A: Negative pressure side main girder
- 31B: Positive pressure side main girder
- 32A: Front edge-negative pressure side shell
- 32B: Front edge-positive pressure side shell
- 32C: Rear edge-negative pressure side shell
- 32D: Rear edge- positive pressure side shell
- 33A: Front edge side web
- 33B: Rear edge side web
- 41: FRP
- 42A to 42D: FRP laminar
- 43: Fiber
- 44: Resin
- 51: Sandwich material
- 52A, 52B: FRP skin
- 53: Core material
- 61A to 61D: Fiber layer
- 71: Tube
- 81: Resin-rich area

## Claims

1. A wind turbine blade comprising:
a structural material constituting the blade (4),
plural optical fiber sensors (15A to 15G) arranged within or on a surface of the structural material, and
an optical fiber (43) cable connecting adjacent ones of the optical fiber sensors (15A to 15G),
wherein a length of the optical fiber (43) cable is longer than the shortest distance linking the adjacent ones of the optical fiber sensors (15A to 15G).

2. The wind turbine blade according to Claim 1,
wherein the structural material contains fiber (43) reinforcing resin (44), and
the optical fiber sensors (15A to 15G) and the optical fiber cable are arranged as embedded in the fiber (43) reinforcing resin (44).

3. The wind turbine blade according to Claim 2, comprising a tube (71) that covers the optical fiber (43) cable and is embedded in the fiber reinforcing resin (44).

4. The wind turbine blade according to Claim 2, comprising a filler material that covers the optical fiber cable and is embedded in the fiber reinforcing resin and is less rigid than the optical fiber cable.

5. The wind turbine blade according to any one of Claims 2 to 4,
wherein the optical fiber sensors (15A to 15G) and the optical fiber cable are arranged as embedded in the fiber direction of the fiber reinforcing resin.

6. The wind turbine blade according to any one of Claims 2 to 5, comprising a main girder containing the fiber reinforcing resin,
wherein the optical fiber sensors (15A to 15G) and the optical fiber cable are arranged as embedded in the main girder of the wind turbine blade.

7. The wind turbine blade according to any one of Claims 2 to 5, comprising a shell containing the fiber reinforcing resin,
wherein the optical fiber sensors (15A to 15G) and the optical fiber cable are arranged as embedded in the shell.

8. The wind turbine blade according to Claim 6 or 7,
wherein the optical fiber sensors (15A to 15G) and the optical fiber cable are arranged as embedded on an inner surface side of the main girder or the shell.

9. The wind turbine blade according to any one of Claims 2 to 5, comprising a web containing the fiber reinforcing resin,
wherein the optical fiber sensors (15A to 15G) and the optical fiber cable are arranged as embedded in the web.

10. The wind turbine blade according to Claim 1,
wherein the optical fiber sensors (15A to 15G) and the optical fiber cable are arranged as stuck to a surface of the wind turbine blade.

11. A wind power generation plant comprising:
a rotor (6) having the wind turbine blade according to any one of Claims 1 to 10 and a hub (5),
a nacelle (3) pivotally supporting the rotor (6), and
a tower (2) rotatably supporting the nacelle (3).
